# EUROPÄISCHE PATENTSCHRIFT

(11) **EP 1 213 529 B1**
(45) Veröffentlichungstag und Bekanntmachung des Hinweises auf die Patenterteilung: **10.09.2003**
(21) Anmeldenummer: 00126808.5
(22) Anmeldetag: 07.12.2000
(51) Int. Cl.: F16N 11/08

(54) **Schmierstoffspender**
Lubricant dispenser
Distributeur de graisse

(43) Veröffentlichungstag der Anmeldung: 12.06.2002
(73) Patentinhaber: perma-tec GmbH & Co. KG, 97717 Euerdorf (DE)
(72) Erfinder: Weigand, Michael, Dr., 97725 Elfershausen (DE); Brand, Armin, 97688 Bad Kissingen (DE); Scheit, Bernd, Dipl.-Ing., 97708 Bad Bocklet-Aschach (DE); Hildenbrand, Thomas, 97769 Bad Brückenau (DE)
(74) Vertreter: Albrecht, Rainer Harald, Dr.-Ing.

(56) Entgegenhaltungen:
- EP-A- 0 845 631
- DE-U- 29 902 553
- US-A- 4 653 675
- US-A- 5 271 528

## Beschreibung

Die Erfindung betrifft einen Schmierstoffspender, der ein Gehäuse, einen an das Gehäuse angeschlossenen Schmierstoffvorratsbehälter mit einem Kolben sowie einen elektromechanischen Antrieb aufweist.

Bei einer aus EP-A 0 845 631 bekannten Ausführung weist der elektromechanische Antrieb eine Spindel auf, die von einem Getriebemotor angetrieben ist. Der Schmierstoffvorratsbehälter ist mit einer Austrittsöffnung für Schmierstoff versehen, der mit einer Kolbenbewegung ausgepresst wird. Der im Schmierstoffvorratsbehälter erreichbare Druckaufbau ist begrenzt. Wenn sich an der Austrittsöffnung oder in einer anschließenden Leitung ein großer Fließwiderstand aufbaut, spricht eine Überlastschutzeinrichtung an, die den elektromechanischen Antrieb abschaltet, und ist die Versorgung der Schmierstellen mit Schmiermittel nicht gewährleistet. Bei der bekannten Ausführung ist ferner der Wechsel des Schmierstoffvorratsbehälters aufwendig. Nachgeordnete Leitungssysteme müssen von dem Schmierstoffvorratsbehälter gelöst werden. Sofern der elektromechanische Antrieb extern mit Strom versorgt wird und/oder der Schmierstoffspender an eine Zentralsteuerung angeschlossen ist, müssen elektrische Steckverbindungen von dem Gehäuse abgezogen werden, bevor das den elektromechanischen Antrieb enthaltende Gehäuse von dem Schmierstoffvorratsbehälter abgeschraubt werden kann.

Aus der Praxis sind ferner Schmierstoffspender bekannt, die aus einer in einem Gehäuse angeordneten Kolbenpumpe und einem lösbar mit dem Gehäuse verbundenen Schmierstoffvorratsbehälter bestehen. An der Saugseite der Kolbenpumpe schließt ein gehäusefester Kanal an, der in den Schmierstoffvorratsbehälter einmündet. Das Gehäuse, in dem die Kolbenpumpe, eine Steuereinrichtung und ggf. Batterien zur Stromversorgung der Kolbenpumpe angeordnet sind, weist einen Auslasskanal auf, der mit der Druckseite der Kolbenpumpe verbunden ist. Der Schmierstoffvorratsbehälter enthält einen federbelasteten Kolben, der den Schmierstoffvorrat unter Druck setzt und das zumeist sehr viskose Schmiermittel, z. B. Fett, der Kolbenpumpe saugseitig zuführt. Durch die ständige Druckbeaufschlagung des Schmiermittelvorrats besteht die Gefahr, dass der Schmierstoffspender ausblutet, d. h. dass unter der Druckbeaufschlagung durch den Kolben ständig geringe Schmiermittelmengen ausgepresst werden. Die Kolbenpumpe stellt ferner ein verhältnismäßig aufwendiges und teures Aggregat dar.

Der Erfindung liegt die Aufgabe zugrunde, einen elektromechanisch betriebenen Schmierstoffspender anzugeben, der einfach aufgebaut ist und einen exakt dosierten Schmierstoffaustrag mit hohem Auspressdruck ermöglicht. Der Schmierstoffvorrat soll nicht von einem druckfederbelasteten Kolben beaufschlagt sein, um die Gefahr eines Ausblutens zu vermeiden.

Gegenstand der Erfindung und Lösung dieser Aufgabe ist ein Schmierstoffspender, der ein Gehäuse, einen an das Gehäuse angeschlossenen Schmierstoffvorratsbehälter mit einem Kolben, eine Teleskophohlspindel und einen elektromechanischen Stellantrieb zur Längenveränderung der Teleskophohlspindel aufweist,
wobei die Teleskophohlspindel an einem Ende gehäusefest angeordnet ist, einen Schmierstoffdurchlasskanal aufweist und am anderen Ende mit einem Kolben zusammenwirkt, der eine Durchlassöffnung für Schmierstoff enthält,
wobei im Schmierstoffdurchlasskanal zumindest ein einlassseitiges Rückschlagventil angeordnet ist und
wobei die Teleskophohlspindel im Wechsel längenvergrößernde und längenverkürzende Stellhübe unterschiedlicher Länge ausführt.

Die Stellhübe sind so aufeinander abgestimmt, dass bei einem längenvergrößernden Stellhub der Teleskophohlspindel eine vorgegebene, durch eine Kolbenbewegung verdrängte Schmiermittelmenge durch das sich öffnende Rückschlagventil in den Schmierstoffdurchlasskanal eintritt und dass bei dem nachfolgenden, längenverkürzenden Stellhub die Schmiermittelmenge unter der Wirkung des geschlossenen, einlassseitigen Rückschlagventils aus dem Schmierstoffdurchlasskanal ausgepresst wird. Gemäß einer bevorzugten Ausführungsform der Erfindung ist der Kolben mit Reibung, z. B. durch umfangsseitig angeordnete Elastomerdichtungen, im Schmierstoffvorratsbehälter drehfest gehalten und führt keine Rückstellbewegungen aus. Bei einem längenvergrößernden Stellhub wird die Teleskophohlspindel gegen den Kolben bewegt und drückt den Kolben um ein vorgegebenes Maß Δx vorwärts, wobei Schmiermittel verdrängt wird und durch das sich öffnende Rückschlagventil in den Schmierstoffdurchlasskanal der Teleskophohlspindel eintritt. Bei dem nachfolgenden, längenverkürzenden Stellhub wird die dem Schmierstoffdurchlasskanal zuvor zugeführte Schmiermittelmenge durch Kontraktion der Teleskophohlspindel aus dem Schmierstoffdurchlasskanal ausgepresst. Der längenvergrößernde Stellhub der Teleskophohlspindel ist um das Maß Δx größer als der nachfolgende längenverkürzende Stellhub. Die Stellhübe sind kinematisch gekoppelt, so dass sie präzise aufeinander abgestimmt werden können.

Gemäß einer bevorzugten Ausführungsform der Erfindung besteht die Teleskophohlspindel aus einem im Gehäuse fest angeordneten Rohr und einer schiebebeweglich auf dem Rohr angeordneten Hohlspindel mit Außengewinde. Auf der Hohlspindel ist ein Antriebsrad mit Innengewinde angeordnet, welches im Gehäuse drehbeweglich und axialfest gelagert und von einem Ritzel des Stellantriebes angetrieben ist. Zwischen dem Rohr und der Hohlspindel sind zweckmäßig Dichtungen, z. B. in Form von Elastomerringen, angeordnet. Vorteilhaft ist es ferner, am auslassseitigen Ende des Schmierstoffdurchlasskanals ein zweites Rückschlagventil anzuordnen.

Für die konstruktive Ausbildung des Stellantriebes ergeben sich verschiedene Möglichkeiten. Gemäß einer bevorzugten Ausführung weist der Stellantrieb einen Motor auf, der durch eine Steuerung im Wechsel rechtsdrehend und linksdrehend betrieben wird. Im Rahmen der Erfindung liegt es auch, einen Getriebemotor einzusetzen, der eine mechanische Umschalteinrichtung für eine Drehrichtungsumkehr der Antriebswelle aufweist. Grundsätzlich besteht ferner die Möglichkeit, der Hohlspindel zwei Motoren zuzuordnen, die unterschiedliche Drehrichtungen aufweisen und im Wechsel angesteuert werden.

In weiterer Ausgestaltung lehrt die Erfindung, dass der Stellantrieb eine elektronische Steuerung mit einem Messwertaufnehmer aufweist, der die Zahl der Umdrehungen des Motors oder eines mittelbar oder unmittelbar von dem Motor angetriebenen Ritzels zählt, wobei die elektronische Steuerung nach einer vorgegebenen Zahl von Umdrehungen den Elektromotor stoppt und wobei für den längenvergrößernden Stellhub und den längenverkürzenden Stellhub unterschiedliche, auf die Stellhübe der Teleskophohlspindel abgestimmte Werte vorgegeben sind.

Der Kolben kann einen mit der Durchlassöffnung versehenen Zapfen aufweisen, auf den das kolbenseitige Ende der Teleskophohlspindel axial beweglich aufgeschoben ist, wobei zwischen den Zapfen und der Teleskophohlspindel zweckmäßig eine Dichtung angeordnet ist. Gemäß einer bevorzugten Ausführung der Erfindung weist die Teleskophohlspindel eine Bundfläche auf, die bei einem längenvergrößernden Stellhub an dem Kolben anschlägt. Ferner weist die Teleskophohlspindel einen Fortsatz auf, der axial beweglich durch die Durchlassöffnung des Kolbens geführt ist und in den mit Schmierstoff gefüllten Raum des Schmierstoffvorratsbehälters vorsteht. Vorzugsweise ist der Kolben mit einem die Durchlassöffnung enthaltenen Auslassstutzen versehen, wobei zwischen dem Auslassstutzen und der Teleskophohlspindel eine Dichtung angeordnet ist.

Der Schmierstoffvorratsbehälter ist mit dem Gehäuse, in dem der Stellantrieb, die dem Stellantrieb zugeordnete elektronische Steuerung und der gehäusefeste Teil der Teleskophohlspindel angeordnet sind, lösbar verbunden. Das längsbewegliche Anschlussende der Teleskophohlspindel steht an einer Stirnseite des Gehäuses vor. Der mit Reibung am Schmierstoffvorratsbehälter drehfest gehaltene Kolben führt keine Rückstellbewegungen aus. Wenn der Kolben an der Stirnfläche des Schmierstoffvorratsbehälters anschlägt, erhält der Stellantrieb von der zugeordneten elektronischen Steuerung einen Rückfahrimpuls und wird die Teleskophohlspindel in eine Ausgangsposition zurückbewegt. Mit dieser Rückstellbewegung wird ein großer Teil des im Schmierstoffdurchlasskanal noch enthaltenen Schmiermittels ausgepresst. Danach kann der entleerte Schmierstoffvorratsbehälter durch einen mit Schmierstoffvorrat befüllten Behälter ausgetauscht werden. Da an dem Schmierstoffvorratsbehälter weder ein Schmierstoffauslassstutzen angeordnet ist, noch an den Schmierstoffvorratsbehälter Leitungen zur Datenübertragung oder Stromversorgung angeschlossen sind, ist der Wechsel des Schmierstoffvorratsbehälters sehr einfach.

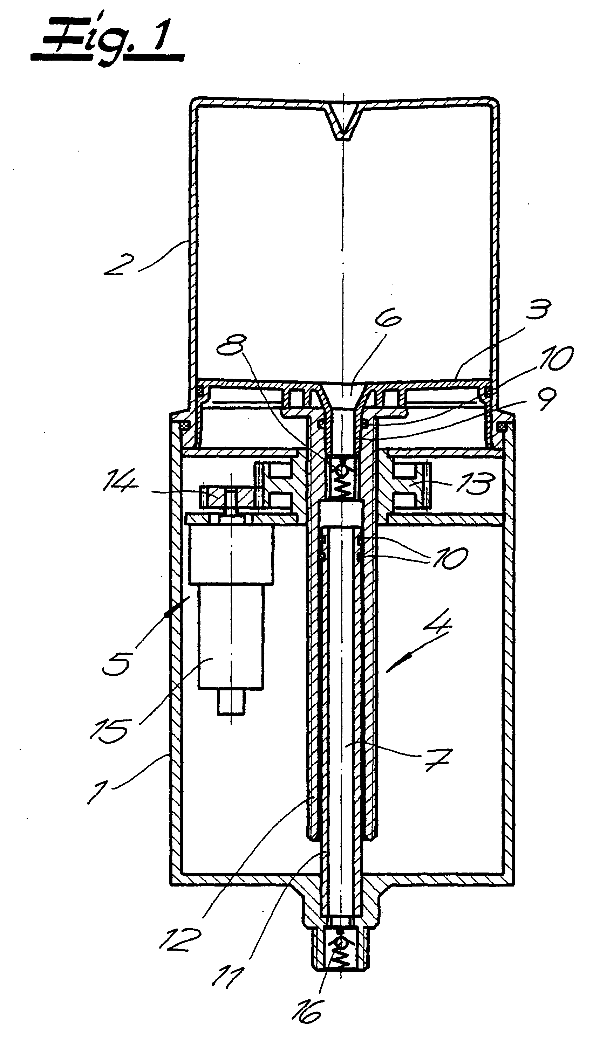

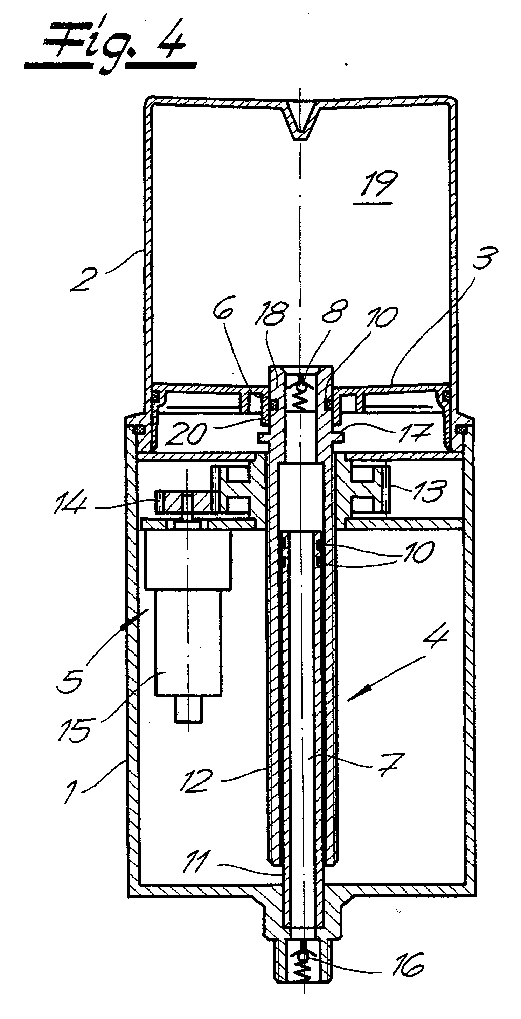

Im Folgenden wird die Erfindung anhand einer lediglich ein Ausführungsbeispiel darstellenden Zeichnung erläutert. Die Figuren 1 bis 3 zeigen schematisch den Längsschnitt durch einen erfindungsgemäßen Schmierstoffspender in unterschiedlichen Funktionsstellungen. In Fig. 4 ist eine weitere Ausgestaltung des Schmierstoffspenders dargestellt.

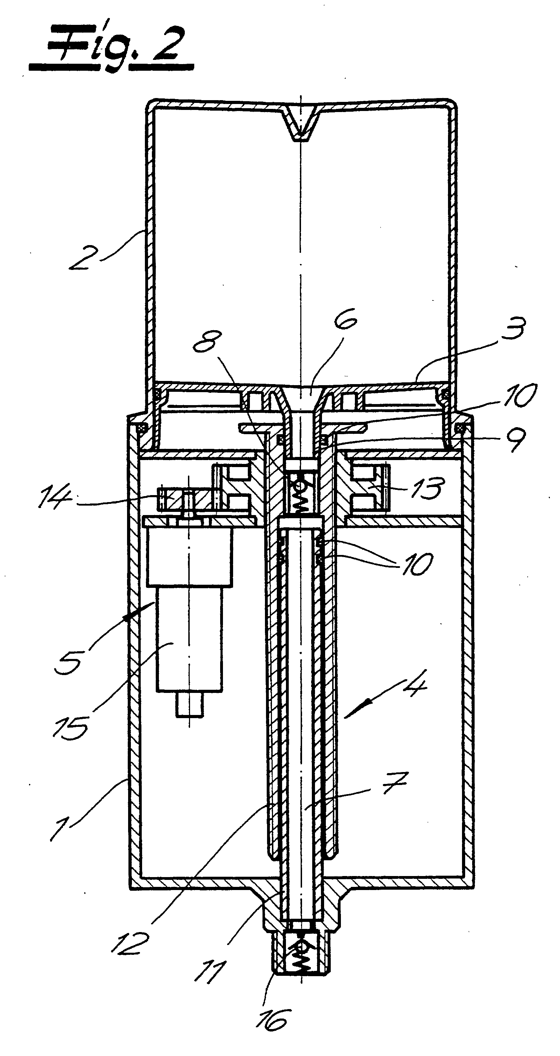

Der erfindungsgemäße Schmierstoffspender weist ein Gehäuse 1, einen an das Gehäuse 1 angeschlossenen Schmierstoffvorratsbehälter 2 mit einem Kolben 3, eine Teleskophohlspindel 4 und einen elektromechanischen Stellantrieb 5 zur Längenveränderung der Teleskophohlspindel 4 auf. Die Teleskophohlspindel 4 ist an einem Ende gehäusefest angeordnet und liegt zumindest in der in Fig. 1 dargestellten Funktionsstellung am anderen Ende am Kolben 3 an. Sie weist ferner einen an eine Durchlassöffnung des Kolbens 3 anschließenden Schmierstoffdurchlasskanal 7 auf. Im Schmierstoffdurchlasskanal 7 ist zumindest ein einlassseitiges Rückschlagventil 8 angeordnet. Die Teleskophohlspindel 4 führt im Wechsel längenvergrößernde und längenverkürzende Stellhübe unterschiedlicher Länge aus. Ihre Funktion wird aus einer vergleichenden Betrachtung der Fig. 1 und 2 deutlich. Bei einem längenvergrößernden Stellhub, der in Fig. 1 dargestellt ist, wird durch eine Kolbenbewegung eine Schmiermittelmenge aus dem Schmierstoffvorratsbehälter 2 verdrängt. Sie tritt durch das sich öffnende Rückschlagventil 8 in den Schmierstoffdurchlasskanal 7 ein. Bei dem nachfolgenden, in Fig. 2 dargestellten, längenverkürzenden Stellhub wird diese Schmiermittelmenge unter der Wirkung des geschlossenen einlassseitigen Rückschlagventiles 8 aus dem Schmiermitteldurchlasskanal 7 ausgepresst. Der Kolben 3 weist einen mit der Durchlassöffnung 6 versehenen kolbenunterseitigen Zapfen 9 auf, auf den das kolbenseitige Ende der Teleskophohlspindel 4 axialbeweglich aufgeschoben ist. Zwischen dem Zapfen 9 und der Teleskophohlspindel 4 ist eine Dichtung 10 angeordnet. Der Kolben 3 ist mit Reibung im Schmierstoffvorratsbehälter 2 festgehalten und führt keine Rückstellbewegungen aus.

Einer vergleichenden Betrachtung der Figuren entnimmt man, dass die Teleskophohlspindel 4 aus einem im Gehäuse fest angeordneten Rohr 11 und einer schiebebeweglich auf dem Rohr 11 angeordneten Hohlspindel 12 mit Außengewinde besteht. Zwischen dem Rohr 11 und der Hohlspindel 12 sind Dichtungen 10 vorgesehen. Auf der Hohlspindel 12 ist ein Antriebsrad 13 mit Innengewinde angeordnet, welches im Gehäuse 1 drehbeweglich und axialfest gelagert und von einem Ritzel 14 des Stellantriebes 5 angetrieben ist. Der Stellantrieb 5 weist einen Gleichstrommotor 15 auf, der durch eine Steuerung im Wechsel rechtsdrehend und linksdrehend betrieben wird. Die Stromversorgung des Motors 15 kann extern oder durch Batterien, die in das Gehäuse 1 eingesetzt werden, erfolgen. Der Stellantrieb 5 weist ferner eine elektronische Steuerung auf, die zweckmäßig mit einem Drehzahlsensor ausgerüstet ist. Der Drehzahlsensor zählt die Zahl der Umdrehungen des Motors oder eines mittelbar oder unmittelbar von dem Motor angetriebenen Ritzels. Nach einer vorgegebenen Zahl von Umdrehungen stoppt die elektronische Steuerung den Motor 15, wobei für den längenvergrößernden Stellhub und den längenverkürzenden Stellhub unterschiedliche, auf die Stellhübe der Teleskophohlspindel 4 abgestimmte Werte vorgegeben sind.

Der Schmierstoffvorratsbehälter 2 ist mit dem Gehäuse 1 lösbar verbunden. Im Gehäuse 1 sind der Stellantrieb 5 mit zugeordneter elektronischer Steuerung und der gehäusefeste Teil 11 der Teleskophohlspindel 4 angeordnet. Das längsbewegliche Anschlussende 12 der Teleskophohlspindel 4 steht an einer Stirnfläche des Gehäuses 1 außenseitig vor. Nach Entleerung des Schmierstoffvorratsbehälters 2 wird dieser durch einen mit Schmierstoffvorrat gefüllten, neuen Behälter ersetzt.

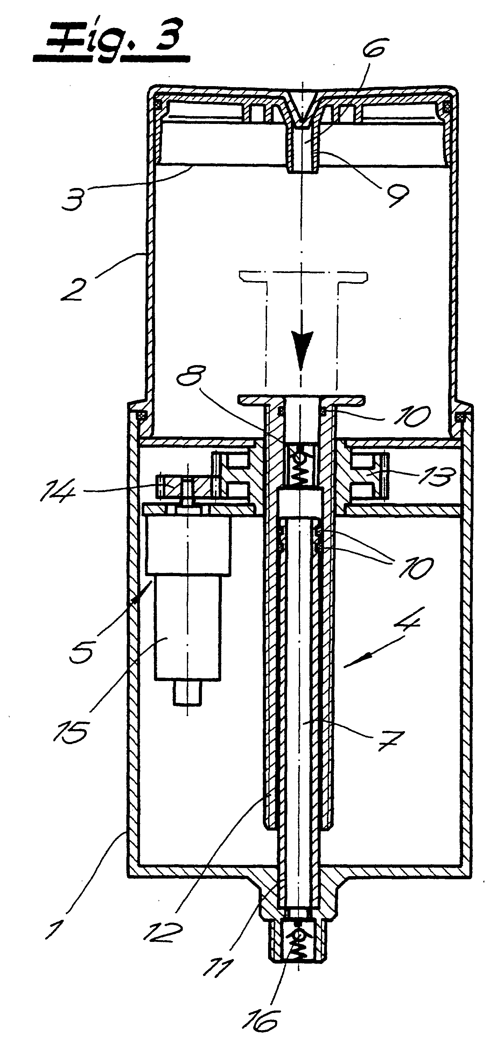

Wenn der Kolben 3 nach Entleerung des Schmierstoffvorratsbehälters 2 an einer Stirnfläche des Schmierstoffvorratsbehälters 2 anschlägt, erhält der Stellantrieb 5 von der zugeordneten elektronischen Steuerung einen Rückfahrimpuls und wird die Teleskophohlspindel 4 in eine in Fig. 3 dargestellte Ausgangsposition zurückbewegt, wobei ein Teil des im Schmierstoffdurchlasskanal 7 noch enthaltenen Schmiermittels durch Kontraktion der Teleskophohlspindel 4 am bodenseitigen Auslass des Gehäuses 1 ausgepresst wird. Die Fig. 3 zeigt diesen Vorgang, wobei die Rückstellbewegung der Teleskophohlspindel 4 durch einen Richtungspfeil angedeutet ist.

Den Figuren entnimmt man, dass am auslassseitigen Ende des Schmierstoffdurchlasskanals ein zweites Rückschlagventil 16 angeordnet ist. Es kann im gehäusefest angeordneten Rohr 11 der Teleskophohlspindel oder - wie in den Figuren dargestellt - in einer Ventilaufnahme des Gehäuses 1 angeordnet sein.

Bei der in Fig. 4 dargestellten Ausführung des erfindungsgemäßen Schmierstoffspenders weist die Teleskophohlspindel 4 eine Bundfläche 17 auf, die bei einem längenvergrößernden Stellhub an dem Kolben 3 anschlägt. Ein Fortsatz 18 der Teleskophohlspindel 4 ist axialbeweglich durch die Durchlassöffnung 6 des Kolbens geführt und steht in den mit Schmierstoff gefüllten Raum 19 des Schmierstoffvorratsbehälters 2 vor. Der Kolben 3 weist einen die Durchlassöffnung 6 enthaltenen Auslassstutzen 20 auf. Zwischen dem Auslassstutzen 20 und der Teleskophohlspindel 4 ist eine Dichtung 10 angeordnet.

## Patentansprüche

1. Schmierstoffspender, der ein Gehäuse (1), einen an das Gehäuse (1) angeschlossenen Schmierstoffvorratsbehälter (2) mit einem Kolben (3) und einen elektromechanischen Stellantrieb (5) aufweist, **gekennzeichnet durch** eine Teleskophohlspindel (4),
die an einem Ende gehäusefest angeordnet ist, einen Schmierstoffdurchlasskanal (7) aufweist und am anderen Ende mit dem Kolben (3) zusammenwirkt, der eine Durchlassöffnung (6) für Schmierstoff enthält,
wobei im Schmierstoffdurchlasskanal (7) zumindest ein einlassseitiges Rückschlagventil (8) angeordnet ist und
wobei der Stellantrieb (5) der Längenveränderung der Teleskophohlspindel (4) dient, wobei die Teleskophohlspindel (4) im Wechsel längenvergrößernde und längenverkürzende Stellhübe unterschiedlicher Länge ausführen kann.

2. Schmierstoffspender nach Anspruch 1, **dadurch gekennzeichnet, dass** am auslassseitigen Ende des Schmierstoffdurchlasskanals (7) ein zweites Rückschlagventil (16) angeordnet ist.

3. Schmierstoffspender nach Anspruch 1 oder 2, **dadurch gekennzeichnet, dass** die Teleskophohlspindel (4) aus einem im Gehäuse (1) fest angeordneten Rohr (11) und einer schiebebeweglich auf dem Rohr (11) angeordneten Hohlspindel (12) mit Außengewinde besteht und dass auf der Hohlspindel (12) ein Antriebsrad (13) mit Innengewinde angeordnet ist, welches im Gehäuse (1) drehbeweglich und axialfest gelagert und von einem Ritzel (14) des Stellantriebes (5) angetrieben ist.

4. Schmierstoffspender nach Anspruch 3, **dadurch gekennzeichnet, dass** zwischen dem Rohr (11) und der Hohlspindel (12) Dichtungen (10) angeordnet sind.

5. Schmierstoffspender nach einem der Ansprüche 1 bis 4, **dadurch gekennzeichnet, dass** der Stellantrieb (5) einen Motor (15) aufweist, der durch eine Steuerung im Wechsel rechtsdrehend und linksdrehend betrieben wird.

6. Schmierstoffspender nach einem der Ansprüche 1 bis 5, **dadurch gekennzeichnet, dass** der Stellantrieb (5) eine elektronische Steuerung mit einem Messwertaufnehmer aufweist, der die Zahl der Umdrehungen des Motors (15) oder eines mittelbar oder unmittelbar von dem Motor (15) angetriebenen Ritzels zählt, wobei die elektronische Steuerung nach einer vorgegebenen Zahl von Umdrehungen den Motor (15) stoppt und wobei für den längenvergrößernden Stellhub und den längenverkürzenden Stellhub unterschiedliche, auf die Stellhübe der Teleskophohlspindel (4) abgestimmte Werte vorgegeben sind.

7. Schmierstoffspender nach einem der Ansprüche 1 bis 6, **dadurch gekennzeichnet, dass** der Kolben (3) einen mit der Durchlassöffnung (6) versehenen kolbenunterseitigen Zapfen (9) aufweist, auf dem das kolbenseitige Ende (12) der Teleskophohlspindel (4) axial beweglich aufgeschoben ist.

8. Schmierstoffspender nach Anspruch 7, **dadurch gekennzeichnet, dass** zwischen dem Zapfen (9) und der Teleskophohlspindel (4) eine Dichtung (10) angeordnet ist.

9. Schmierstoffspender nach einem der Ansprüche 1 bis 6, **dadurch gekennzeichnet, dass** die Teleskophohlspindel (4) eine Bundfläche (17) aufweist, die bei einem längenvergrößerenden Stellhub an dem Kolben (3) anschlägt, und dass ein Fortsatz (18) der Teleskophohlspindel (4) axialbeweglich durch die Durchlassöffnung (6) des Kolbens (4) geführt ist und in den mit Schmierstoff gefüllten Raum (19) des Schmierstoffvorratsbehälters (2) vorsteht.

10. Schmierstoffspender nach Anspruch 9, **dadurch gekennzeichnet, dass** der Kolben (3) einen in die Durchlassöffnung (6) enthaltenden Auslassstutzen (20) aufweist und dass zwischen dem Auslassstutzen (20) und der Teleskophohlspindel (4) eine Dichtung (10) angeordnet ist.

11. Schmierstoffspender nach einem der Ansprüche 1 bis 10, **dadurch gekennzeichnet, dass** der Stellantrieb (5), die dem Stellantrieb (5) zugeordnete elektronische Steuerung und der gehäusefeste Teil (11) der Teleskophohlspindel (4) im Gehäuse (1) angeordnet sind, dass das längsbewegliche Anschlussende der Teleskophohlspindel (4) an einer Stirnfläche des Gehäuses (1) außenseitig vorsteht und dass der Schmierstoffvorratsbehälter (2) mit dem Gehäuse (1) lösbar verbunden ist.

12. Schmierstoffspender nach einem der Ansprüche 1 bis 11, **dadurch gekennzeichnet, dass** der Kolben (3) mit Reibung im Schmierstoffvorratsbehälter (2) drehfest gehalten ist und keine Rückstellbewegungen ausführt.

13. Schmierstoffspender nach einem der Ansprüche 1 bis 12, **dadurch gekennzeichnet, dass** der Stellantrieb (5) von der zugeordneten elektronischen Steuerung einen Rückfahrimpuls erhält, wenn der Kolben (3) an einer Stirnfläche des Schmierstoffvorratsbehälters (2) anschlägt, und die Teleskophohlspindel (4) in eine Ausgangsposition zurückbewegt.

## Claims

1. A lubricant dispenser which comprises a housing (1), a lubricant supply vessel (2) which comprises a piston (3) and which is attached to the housing (1), and an electro-mechanical actuating drive (5), **characterised by**
a telescopic hollow spindle (4) which comprises a lubricant passageway duct (7), one end of which spindle is attached fixed to the housing and the other end of which cooperates with the piston (3), which contains a passageway opening (6) for lubricant,
wherein at least one non-return valve (8) is disposed in the lubricant passageway duct (7) on the inlet side thereof, and
wherein the actuating drive (5) is employed for changing the length of the telescopic hollow spindle (4), wherein the telescopic hollow spindle (4) is capable of alternately executing length-increasing and length-shortening actuating strokes of different lengths.

2. A lubricant dispenser according to claim 1, **characterised in that** a second non-return valve (16) is disposed at the outlet end of the lubricant passageway duct (7).

3. A lubricant dispenser according to claims 1 or 2, **characterised in that** the telescopic hollow spindle (4) consists of a tube (11) which is fixedly disposed in the housing (1) and of a hollow spindle (12) with has an external thread and which is disposed on the tube (11) so that it can execute sliding movements, and that a drive wheel (13) with an internal thread is disposed on the hollow spindle (12), which drive wheel can move in rotation in the housing (1), is mounted axially fixed, and is driven by a pinion (14) of the actuating drive (5).

4. A lubricant dispenser according to claim 3, **characterised in that** seals (10) are disposed between the tube (11) and the hollow spindle (12).

5. A lubricant dispenser according to any one of claims 1 to 4, **characterised in that** the actuating drive (5) comprises a motor (15) which is operated by a control system so that it rotates clockwise and anti-clockwise alternately.

6. A lubricant dispenser according to any one of claims 1 to 5, **characterised in that** the actuating drive (5) comprises an electronic control system with a transducer, which counts the number of revolutions of the motor (15) or of a pinion which is driven directly or indirectly by the motor (15), wherein the electronic control system stops the motor (15) after a predetermined number of revolutions, and wherein different values, which are matched to the actuating strokes of the telescopic hollow spindle (4), are predetermined for length-increasing actuating strokes and for length-shortening actuating strokes.

7. A lubricant dispenser according to any one of claims 1 to 6, **characterised in that** the piston (3) comprises a neck (9) on its underside which is provided with the passageway opening (6) and on which the piston end (12) of the telescopic hollow spindle (4) is slid so that it can move axially.

8. A lubricant dispenser according to claim 7, **characterised in that** a seal (10) is disposed between the neck (9) and the telescopic hollow spindle (4).

9. A lubricant dispenser according to any one of claims 1 to 6, **characterised in that** the telescopic hollow spindle (4) comprises a collar face (17) which strikes the piston (3) during a length-increasing actuating stroke, and that an extension (18) of the telescopic hollow spindle (4) is passed, so that it can move axially, through the passageway opening (6) in the piston (4) and protrudes into the space (19) which is filled with lubricant in the lubricant supply vessel (2).

10. A lubricant dispenser according to claim 9, **characterised in that** the piston (3) comprises an outlet nozzle (20) which contains the passageway opening (6), and that a seal (10) is disposed between the outlet nozzle (20) and the telescopic hollow spindle (4).

11. A lubricant dispenser according to any one of claims 1 to 10, **characterised in that** the actuating drive (5), the electronic control system which is associated with the actuating drive (5), and the part (11) of the telescopic hollow spindle (4) which is fixed to the housing are disposed in the housing (1), that the longitudinally moveable connection end of the telescopic hollow spindle (4) protrudes externally from an end face of the housing (1), and that the lubricant supply vessel (2) is removably attached to the housing (1).

12. A lubricant dispenser according to any one of claims 1 to 11, **characterised in that** the piston (3) is held rotationally fixed by friction in the lubricant supply vessel (2) and does not execute restoring movements.

13. A lubricant dispenser according to any one of claims 1 to 12, **characterised in that** the actuating drive (5) receives a return travel pulse from the associated electronic control system when the piston (3) strikes an end face of the lubricant supply vessel (2), and the telescopic hollow spindle (4) moves back into a starting position.

## Revendications

1. Distributeur de lubrifiant qui comporte un boîtier (1), un réservoir de lubrifiant (2) raccordé au boîtier (1) avec un piston (3) et un mécanisme de réglage (5) électromécanique,
**caractérisé par** une broche creuse télescopique (4) qui est disposée à une extrémité de manière fixe sur le boîtier, qui comporte un canal de passage de lubrifiant (7) et qui coopère, à l'autre extrémité, avec le piston (3) qui contient une ouverture de passage (6) pour le lubrifiant,
au moins un clapet de non-retour (8) côté entrée étant disposé dans le canal de passage de lubrifiant (7), et
le mécanisme de réglage (5) servant à faire varier la longueur de la broche télescopique (4), tandis que la broche creuse télescopique (4) peut exécuter alternativement des courses de réglage de longueurs différentes qui augmentent ou réduisent la longueur.

2. Distributeur de lubrifiant selon la revendication 1, **caractérisé en ce qu'**à l'extrémité côté sortie du canal de passage de lubrifiant (7) est disposé un deuxième clapet de non-retour (16).

3. Distributeur de lubrifiant selon la revendication 1 ou 2, **caractérisé en ce que** la broche creuse télescopique (4) est constituée d'un tube (11) disposé de manière fixe dans le boîtier (1) et d'une broche creuse (12) avec filetage extérieur, disposée sur le tube (11) de manière mobile à coulissement, et **en ce que** sur la broche creuse (12) est disposée une roue d'entraînement (13) avec taraudage qui est montée dans le boîtier (1) de manière mobile à rotation et fixe axialement, et qui est entraînée par un pignon (14) du mécanisme de réglage (5).

4. Distributeur de lubrifiant selon la revendication 3, **caractérisé en ce qu'**entre le tube (11) et la broche creuse (12), sont placées des garnitures d'étanchéité (10).

5. Distributeur de lubrifiant selon l'une des revendications 1 à 4, **caractérisé en ce que** le mécanisme de réglage (5) comporte un moteur (15) qu'une commande fait tourner alternativement à droite et à gauche.

6. Distributeur de lubrifiant selon l'une des revendications 1 à 5, **caractérisé en ce que** le mécanisme de réglage (5) comporte une commande électronique avec un capteur de valeur de mesure qui compte le nombre de rotations du moteur (15) ou d'un pignon entraîné indirectement ou directement par le moteur (15), la commande électronique stoppant le moteur (15) après un nombre prédéfini de rotations, et des valeurs différentes, adaptées aux courses de réglage de la broche creuse télescopique (4) étant prédéfinies pour la course de réglage augmentant la longueur et la course de réglage réduisant la longueur.

7. Distributeur de lubrifiant selon l'une des revendications 1 à 6, **caractérisé en ce que** le piston (3) comporte un axe (9) sur le côté inférieur du piston, pourvu de l'ouverture de passage (6), sur lequel l'extrémité (12) côté piston de la broche creuse télescopique (4) est enfilée de manière mobile axialement.

8. Distributeur de lubrifiant selon la revendication 7, **caractérisé en ce qu'**une garniture d'étanchéité (10) est placée entre l'axe (9) et la broche creuse télescopique (4).

9. Distributeur de lubrifiant selon l'une des revendications 1 à 6, **caractérisé en ce que** la broche creuse télescopique (4) présente une surface d'épaulement (17) qui, lors d'une course de réglage augmentant la longueur, vient buter contre le piston (3), et **en ce qu'**un prolongement (18) de la broche télescopique (4) est guidé de manière axialement mobile à travers l'ouverture de passage (6) du piston (4), et pénètre dans le volume (19), rempli de lubrifiant, du réservoir de lubrifiant (2).

10. Distributeur de lubrifiant selon la revendication 9, **caractérisé en ce que** le piston (3) comporte une tubulure de sortie (20), contenant l'ouverture de passage (6), et **en ce qu'**une garniture d'étanchéité (10) est placée entre la tubulure de sortie (20) et la broche creuse télescopique (4).

11. Distributeur de lubrifiant selon l'une des revendications 1 à 10, **caractérisé en ce que** le mécanisme de réglage (5), la commande électronique affectée au mécanisme de réglage (5) et la partie (11) de la broche creuse télescopique (4), solidaire du boîtier, sont disposées dans le boîtier (1), **en ce que** l'extrémité de raccordement mobile longitudinalement de la broche creuse télescopique (4) fait saillie à l'extérieur d'une surface frontale du boîtier (1) et **en ce que** le réservoir de lubrifiant (2) est relié de manière séparable au boîtier (1).

12. Distributeur de lubrifiant selon l'une des revendications 1 à 11, **caractérisé en ce que** le piston (3) est maintenu solidairement en rotation avec flottement dans le réservoir de lubrifiant (2) et n'exécute aucun mouvement de rappel.

13. Distributeur de lubrifiant selon l'une des revendications 1 à 12, **caractérisé en ce que** le mécanisme de réglage (5) reçoit, de la commande électronique associée, une impulsion de retour lorsque le piston (3) vient buter contre une surface frontale du réservoir de lubrifiant (2), et la broche creuse télescopique (4) se replace dans une position initiale.
